Europäisches Patentamt

European Patent Office

Office européen des brevets

(11) Publication number: 0 520 461 A2

# EUROPEAN PATENT APPLICATION

(21) Application number: 92110764.5

(22) Date of filing: 26.06.92

(51) Int. Cl.5: G11B 7/09

(30) Priority: 28.06.91 JP 57994/91 U
12.07.91 JP 62581/91 U

(43) Date of publication of application:
30.12.92 Bulletin 92/53

(84) Designated Contracting States:
DE GB

(71) Applicant: Kabushiki Kaisha Kenwood
17-5, Shibuya 2-chome
Shibuya-ku Tokyo(JP)

(72) Inventor: Goto, Soju
No. 201, Dai 2 Kobayashiso, 6-8-1,
Minamidaira
Hino-shi, Tokyo(JP)

(74) Representative: Patentanwälte Leinweber &
Zimmermann
Rosental 7/II Aufg.
W-8000 München 2(DE)

(54) Optical disk record/reproduction device.

(57) A decision circuit compares a bottom envelope detection signal of a reflected light to an optical pickup with a predetermined reference level. The reference level is a level obtained by dividing or level-shifting the bottom envelope detection signal of a reflected light to the optical pickup. A focus error signal and tracking error signal are generated by detecting a peak envelope of an electric signal obtained from a plurality of divided areas of an optical detector and obtaining a difference between detected envelopes at a predetermined set of divided areas.

FIG. I

## BACKGROUND OF THE INVENTION

(Field of the Invention)

The present invention relates to a trace type or write-once type optical disk record/reproduction apparatus. More particularly, the present invention relates to a trace type optical disk record/reproduction apparatus allowing stable focus and tracking control both for recorded and unrecorded disks.

(Description of Related Art)

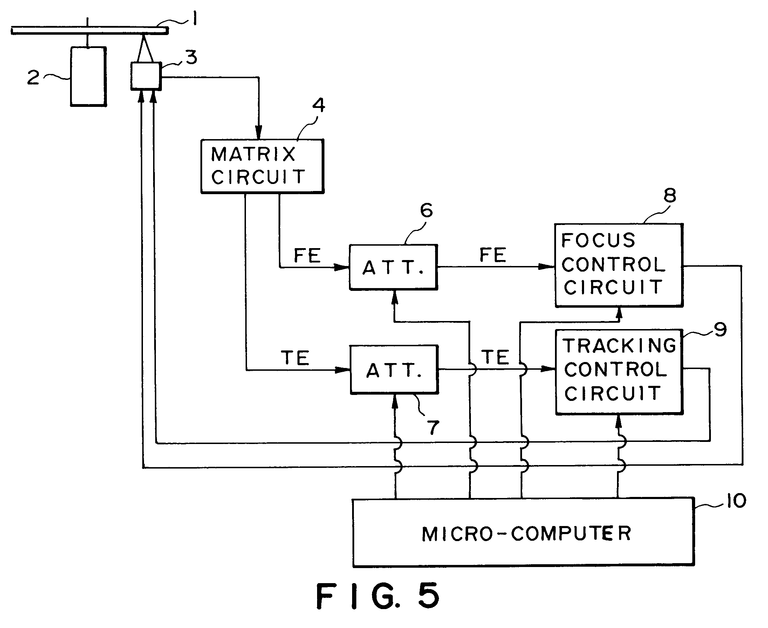

A conventional trace type optical record/reproduction apparatus is constructed such as shown in Fig.5.

In Fig.5, an optical disk is an already recorded disk, unrecorded disk, or partially recorded disk. The optical disk 1 is rotated by a disk motor 2 in accordance with pit information formed on the disk or signals contained in the guide groove. An optical pickup 3 applies a laser beam to the optical disk 1 and receives light reflected from the disk 1. The optical pickup 3 changes the light amount between record and reproduction. Namely, it applies a laser beam of a constant weak level when reproducing and applies a laser beam of a strong level when recording pits.

A laser beam emitted from the optical pickup 3 is reflected by the optical disk 1 and detected by the pickup 3. The detected light is then converted into an electric signal which is amplified by a matrix circuit 4 to generate an information signal, tracking error signal TE and focussing error signal FE. An attenuator 6 attenuates the focus error signal FE outputted from the matrix circuit 4. An attenuator 7 attenuates the tracking error signal TE outputted from the matrix circuit 4. A focus control circuit 8 controls a focus actuator of the pickup 3 in accordance with a focus error signal FE outputted from the attenuator 6. A tracking control circuit 9 controls a tracking actuator and feed mechanism of the pickup 3 in accordance with a tracking error signal outputted from the attenuator 7. A microcomputer 10 controls the focus control circuit 8 and tracking control circuit 9.

The conventional trace type optical disk record/reproduction apparatus constructed as above sets proper gains of the focus and tracking servo systems in accordance with the record/reproduction condition, to maintain a system stability.

However, the conventional apparatus has the following problems. If an unrecorded disk is set to the optical disk record/reproduction apparatus under a reproduction state, the amount of light reflected to the optical pickup increases and the amplitudes of the error signals become large, so that the gains of the servo systems rise and the systems are likely to become unstable.

If a partially recorded disk is used to resume information record at the position following the area already recorded, ones of the servo gains used for record or reproduction are fixedly used necessarily. As a result, malfunction of the servo systems is likely to occur when traversing a boarder between a recorded area and unrecorded area or when locking the tracking servo system immediately after such traverse.

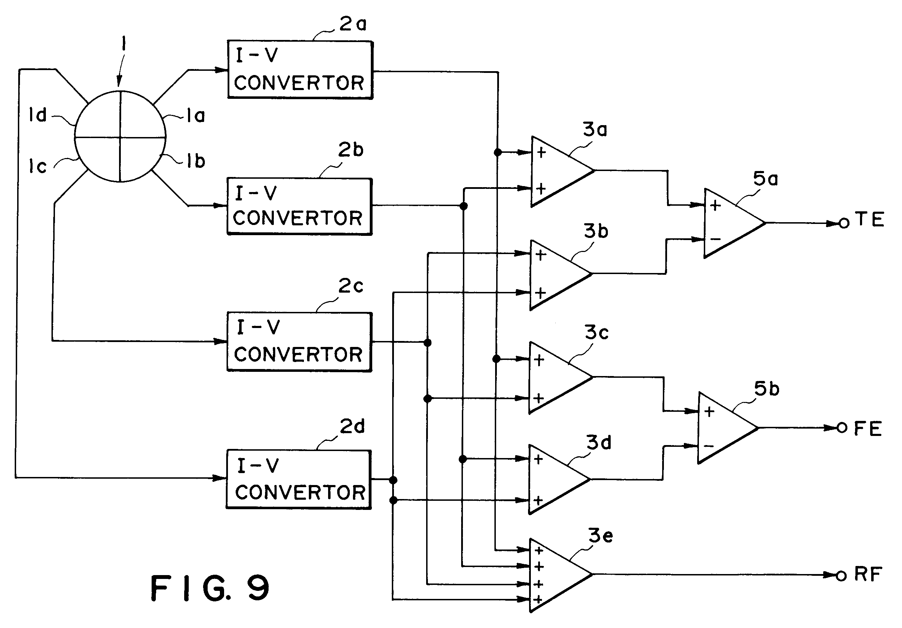

Another problem is also known regarding a recorded area and unrecorded area of an optical disk. In order to focus a laser beam to an information record area of an optical disk such as photomagnetic disks and track type optical disks, and in order to track the disk, a focus error signal and a tracking error signal are generated from electric signals obtained from a reflected laser beam. A conventional error generator circuit of this type is constructed such as shown in Fig.9. This circuit shown in Fig.9 generates a focus error signal by an astigmatism method and a tracking error signal by a push-pull method.

An optical detector 1 for receiving light reflected from the optical disk surface and converting it into an electric signal is divided into four areas 1a to 1d. Current from each area of the optical detector 1 is converted into a voltage signal by each of I-V convertors 2a to 2d. Each of adders 3a to 3e adds a predetermined set of voltage signals from two of the I-V convertors 2a to 2d. The adder 3a adds together the voltage signals from the convertors 2a and 2b, the adder 3b adds together the voltage signals from the convertors 2c and 2d, the adder 3c adds together the voltage signals from the convertors 2a and 2c, the adder 3d adds together the voltage signals from the convertors 2b and 2d, and the adder 3e adds together all the voltage signals from the convertors 2a to 2d. The adder 3e outputs an RF signal.

A subtracter 5a obtains a difference between output signals of the adders 3a and 3b to generate a tracking error signal TE. A subtracter 5b obtains a difference between output signals of the adders 3c and 3d to obtain a focus error signal FE.

With the conventional error signal generator circuit described above, a laser beam is applied from an optical pickup to the surface of an optical disk, and the reflected light is incident to a plurality of divided areas of the optical detector 1. A change in an optical refraction pattern is detected as a light amount difference on the optical detector. The light amount difference is then converted into an electric signal to obtain an error signal.

However, the light amount difference on the divided areas of an already recorded optical disk has a lower average light amount than that of an unrecorded optical disk. Therefore, a detection sensitivity of an error signal basing upon a light amount difference becomes great between an already recorded optical disk and an unrecorded optical disk.

## SUMMARY OF THE INVENTION

It is an object of the present invention to provide a trace type optical disk record/reproduction apparatus allowing stable focus and tracking control both for recorded and unrecorded disks.

In order to solve the above problems, a trace type disk record/reproduction apparatus according to one aspect of the present invention comprises: a focus servo circuit for focusing a laser beam spot on an optical disk; a tracking servo circuit for tracking a guide groove of recorded pits of the optical disk; a decision circuit for deciding whether an area of the optical disk is a recorded area or an unrecorded area; and a controller for controlling at least one of the loop gains of the focus servo circuit and the tracking servo circuit, in accordance with a decision by the decision circuit.

According to the present invention, the decision circuit decides an area of an optical disk whether it is a record area or unrecorded area. In accordance with a decision given by the decision circuit, the gains of the focus and tracking servo systems are set to optimum values. The decision circuit compares a bottom envelope detection signal of a reflected light to an optical pickup with a predetermined reference level. The reference level is a level obtained by dividing or level-shifting the bottom envelope detection signal of a reflected light to the optical pickup.

It is another object of the present invention to provide an error signal generator capable of generating an error signal at high precision with less difference of detection sensitivity between a recorded disk and an unrecorded disk.

In order to solve the above-described problem, in an error signal generator, according to another aspect of the present invention, for generating a focus error signal and a tracking error signal by converting light reflected from an optical recording medium into electric signals by an optical detector divided into a plurality of areas, and by processing the electric signals from a predetermined set of said plurality of areas, there is provided a peak envelope detector for detecting a peak envelope of each of the electric signals, the outputs of the peak envelope detectors being subject to subtraction to generate the focus error signal and the tracking error signal.

According to the present invention, the focus error signal and the tracking error signal are generated by detecting a peak envelope of an electric signal obtained from each of a plurality of divided areas of an optical detector and obtaining a difference between detected envelopes at a predetermined set of divided areas.

## BRIEF DESCRIPTION OF THE DRAWINGS

Fig.1 is a block diagram showing an embodiment of a trace type optical disk record/reproduction apparatus.

Fig.2 is a block diagram showing the structure of the decision circuit of the embodiment shown in Fig.1.

Fig.3 shows signal waveforms at various portions of the decision circuit shown in Fig.2.

Fig.4 is a circuit diagram showing an example of the decision circuit shown in Fig.2.

Fig. 5 is a block diagram showing a conventional trace type optical disk record/reproduction apparatus.

Fig.6 is a circuit diagram of an embodiment of an error signal generator according to the present invention.

Fig.7 shows signal waveforms at various portions of the circuit shown in Fig.6.

Fig.8 is a circuit diagram of another embodiment of the signal generator according to the present invention.

Fig.9 is a circuit diagram of a conventional error signal generator.

## DETAILED DESCRIPTION OF THE EMBODIMENTS

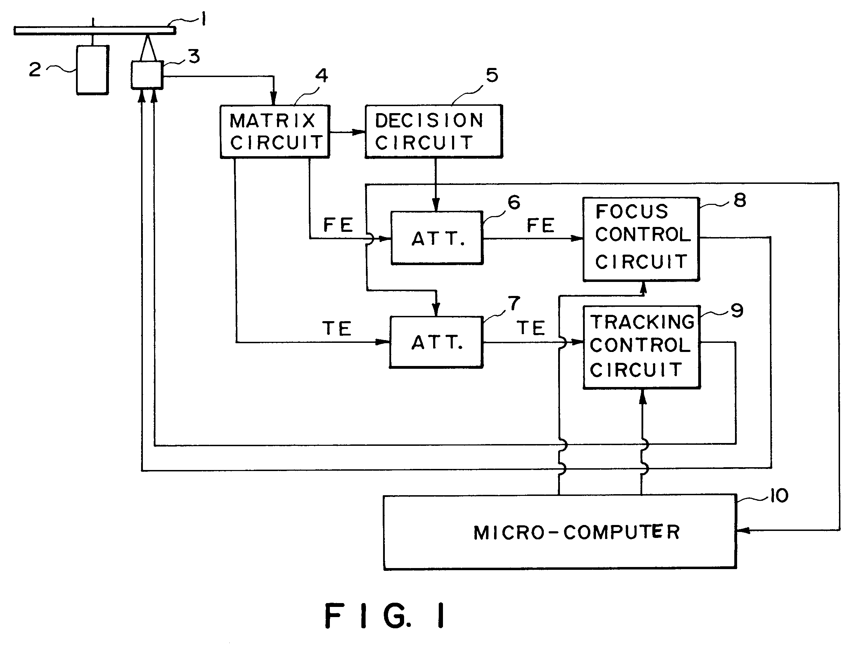

Fig.1 is a block diagram showing an embodiment of a trace type optical disk reproduction apparatus. In Fig.1, elements having identical reference numerals to those shown in Fig.5 have similar functions.

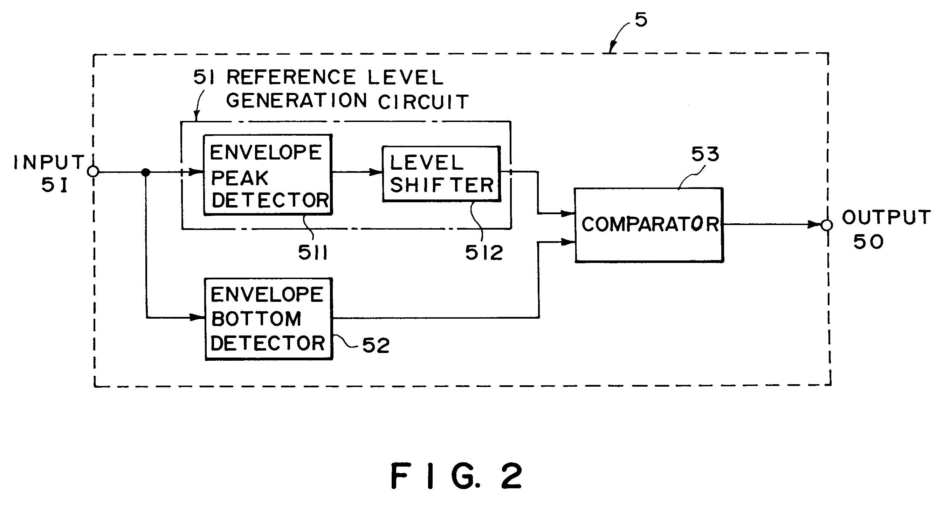

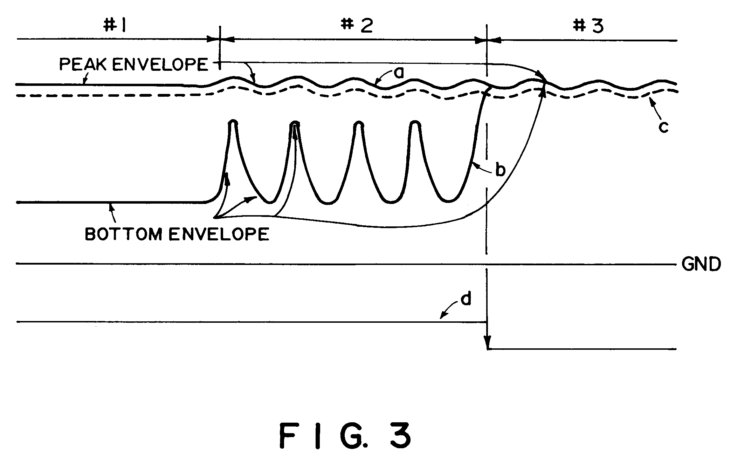

In this embodiment, the gains of servo systems are controlled by attenuators 6 and 7 in accordance with a decision given by a decision circuit 5 for deciding whether an area of an optical disk is the recorded area or unrecorded area. In contrast, fixed gains of servo systems for recording and reproducing are determined by the micro-computer 10 of the conventional apparatus shown in Fig.5. The decision circuit 5 decides an area of an optical disk whether it is a recorded area or unrecorded area, in accordance with an RF signal from a matrix circuit 4. As shown in Fig.2, the decision circuit 5 is constructed of a reference level generation circuit 51, an envelope bottom detector 52 and a comparator 53, the reference level generation circuit 51 being constructed of an envelope peak detector 511 and a level shifter 512. The decision circuit 5 receives an RF signal at its input terminal 1, and the envelope peak detector 511 detects a peak envelope of the RF signal as shown in Fig.3. The detected envelope of the RF signal is shown in Fig.3. The detected envelope peak is lowered by a predetermined level at the level shifter 512 and thereafter supplied to one input terminal of the comparator 53. The envelope bottom detector 52 detects a bottom envelope of the RF signal and outputs it to the other input terminal of the comparator 53. The comparator 53 compares the output from the level shifter 512 with the output from the envelope bottom detector 52 to deliver a decision signal to an output terminal 50, the decision signal deciding whether an area of an optical disk is a recorded area or unrecorded area.

Fig.3 shows waveforms at various portions of the decision circuit shown in Fig.2. In Fig.3, No.1 area represents a waveform reproduced from a recorded area, No.2 area represents a recorded area search waveform, and No.3 area represents a waveform reproduced from a unrecorded area. An envelope peak detected by the envelope peak detectors is indicated by a, a bottom envelope detected by the envelope bottom detector is indicated by b, an output waveform from the level shifter 512 is indicated by c, and an output waveform from the comparator 53 is indicated by d. When an output signal having the waveform d takes a high (H) level, an area of an optical disk is decided as a recorded area, and when it takes a low (L) level, an area of an optical disk is decided as a unrecorded area.

The decision by the decision circuit whether an area is a recorded area or unrecorded area is supplied to attenuators 6 and 7 and to a mircocomputer 10. In accordance with the decision whether an area is a recorded area or unrecorded area, the attenuation levels of the attenuators are changed to set optimum gains of the focus and tracking servo systems.

For an optical disk 1 with all areas recorded, an output from an optical pickup 3 is amplified by the matrix circuit 4 and inputted to the decision circuit 5 as No.1 and No.2 area signals shown in Fig.3. Since an output level (b in Fig.3) from the envelope bottom detector 52 is lower than an output level (c in Fig.3) shifted by the level shifter 512 from an output level (a in Fig.3) of the envelope peak detector 511 by a predetermined level, the comparator 53 of the decision circuit 5 outputs an H level signal (d in Fig.3). For an optical disk with all areas unrecorded, a No.3 area signal shown in Fig.3 is inputted to the decision circuit 5. In this case, an output level of the envelope bottom detector 52 is generally equal to an output level of the envelope peak detector 511, and an output level of the envelope bottom detector 52 is higher than an output level shifted by the predetermined level by the level shifter 512. Therefore, the comparator 53 outputs an L level signal.

If the decision circuit 5 outputs the H level signal, it is decided as a recorded area with reduced average reflected light amount from the optical disk. The attenuators 6 and 7 are therefore set so as not to attenuate a focus error signal and tracking error signal so much. Conversely, if the decision circuit 5 outputs the L level signal, it is decided as a unrecorded area with increased average reflected light amount from the optical disk. The attenuators 6 and 7 are therefore set so as to attenuate a focus error signal and tracking error signal by predetermined levels to obtain the same level as that of the recorded area. In this manner, the loop gains of the focus and tracking servo systems are made generally constant for both the recorded area and unrecorded area, stabilizing the servo systems.

For an optical disk having both recorded and unrecorded areas, the decision circuit can decide quickly whether an area is a recorded area or unrecorded area. Therefore, when the waveform changes from No.2 area to No.3 or vice versa during a search operation, the attenuators 6 and 7 are quickly set to maintain constant loop gains of the servo systems.

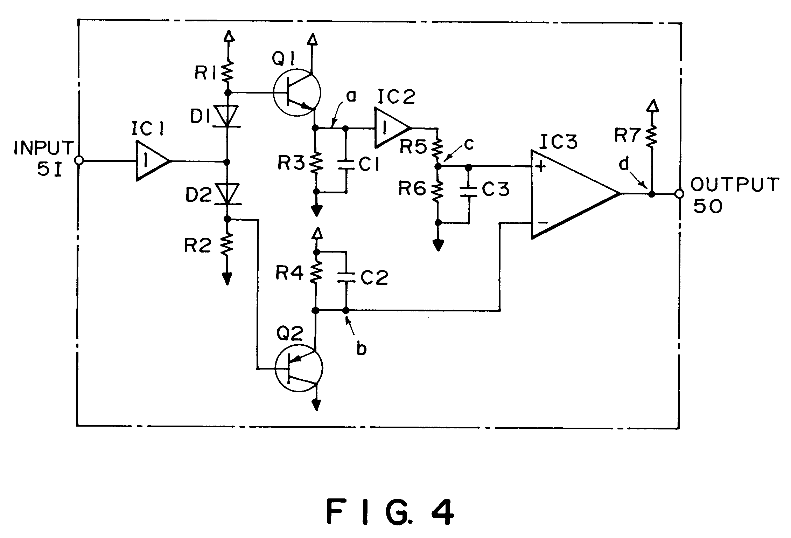

Fig.4 is a circuit diagram showing an example of a particular structure of the decision circuit 5 shown in Fig.2. In Fig.4, IC1 and IC2 represent a buffer amplifier, IC3 represents a comparator, D1 and D2 represent a diode, R1 to R7 represent a resistor, C1 to C3 represent a capacitor, and Q1 and Q2 represent a transistor. A power source Vcc is connected to white arrow terminals, and another power source Vss is connected to black arrow terminals.

According to the above-described embodiment of the present invention, the decision circuit decides an area of an optical disk whether it is a recorded area or unrecorded area. In accordance with a decision given by the decision circuit, the gains of the focus and tracking servo systems are set to optimum values. An output from the decision circuit is supplied to the micro-computer to provide a decision whether an area is a recorded area or unrecorded area immediately after starting disk rotation, enabling a quick response of the apparatus. Furthermore, in the decision circuit a decision reference level is generated basing upon a peak of reflected light amount from a disk, thereby providing a stable decision even if the light reflection of a disk changes or fluctuates.

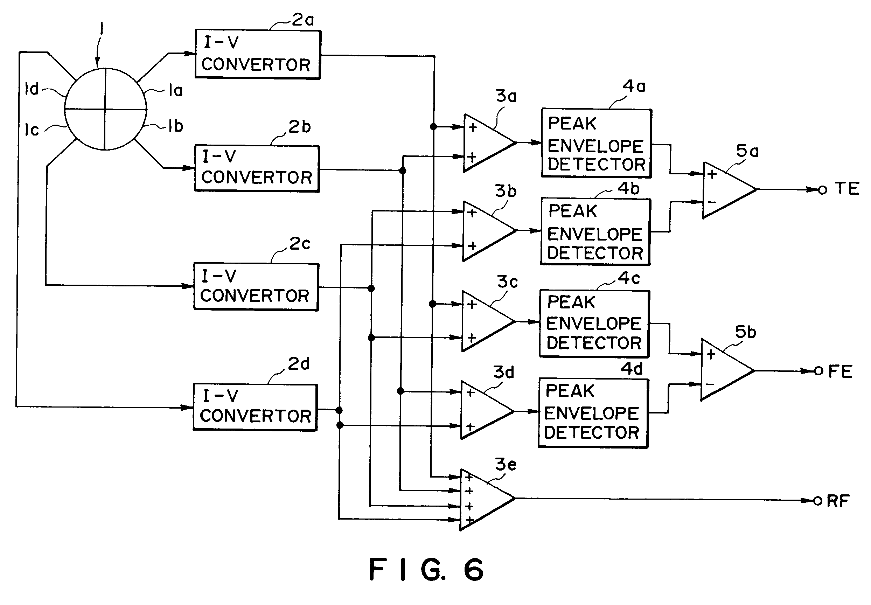

Fig.6 is a circuit diagram showing an embodiment of an error signal generator according to the present invention. Like elements having identical reference numerals to those shown in Fig.9 have similar functions.

Current signals from divided areas 1a to 1d of an optical detector 1 such as PIN diodes are converted into voltage signals by I-V convertors 2a to 2d. Each of adders 3a to 3e adds a predetermined set of voltage signals from the I-V convertors in the same manner described with Fig.9.

Peak envelop detectors 4a to 4d are each connected to a corresponding one of the adders 3a to 3d. Each envelope detector detects and outputs a peak envelope having a waveform corresponding to a reflected peak light amount. A subtracter 5a calculates a difference between outputs from the peak envelope detectors 4a and 4b to generate a tracking error signal TE. A subtracter 5b calculates a difference between outputs from the peak envelope detectors 4c and 4d to generate a focus error signal FE.

Assuming that a focus error signal is calculated by an astigmatism method and a tracking error signal is calculated by a push-pull method, the tracking error signal TE is calculated by (1a + 1b) - (1c + 1d) of the four divided areas of the optical detector 1, the focus error signal FE is calculated by (1a + 1c) - (1b + 1d), and the information signal RF is calculated by (1a + 1b + 1c + 1d).

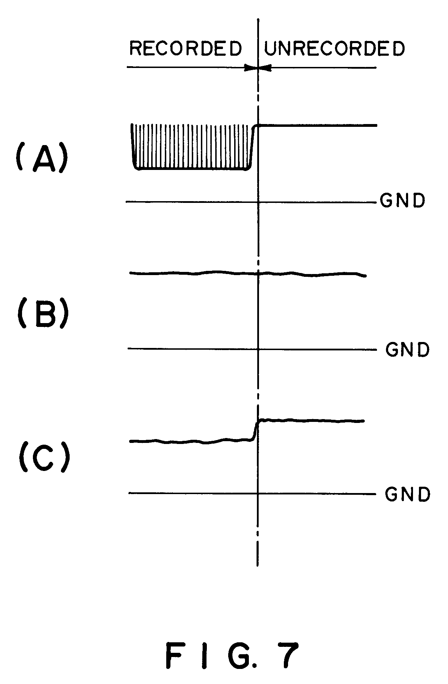

Fig.7 shows waveforms at various portions of the error signal generator of the embodiment shown in Fig.6. Indicated at (A) in Fig.7 is an output waveform of each adder 3a to 3e shown in Fig.6, and indicated at (B) is an output waveform of each peak envelope detector 4a to 4d.

In the embodiment shown in Fig.6, signals from the peak envelope detectors 4a to 4d are inputted to the subtracters 5a and 5b. Therefore, an average reflected light amount can be prevented from lowering, which might otherwise be caused by diffraction at pits of an already recorded optical disk. It is possible to detect a focus error signal and tracking error signal at a constant sensitivity irrespective of whether an optical disk is already recorded or not.

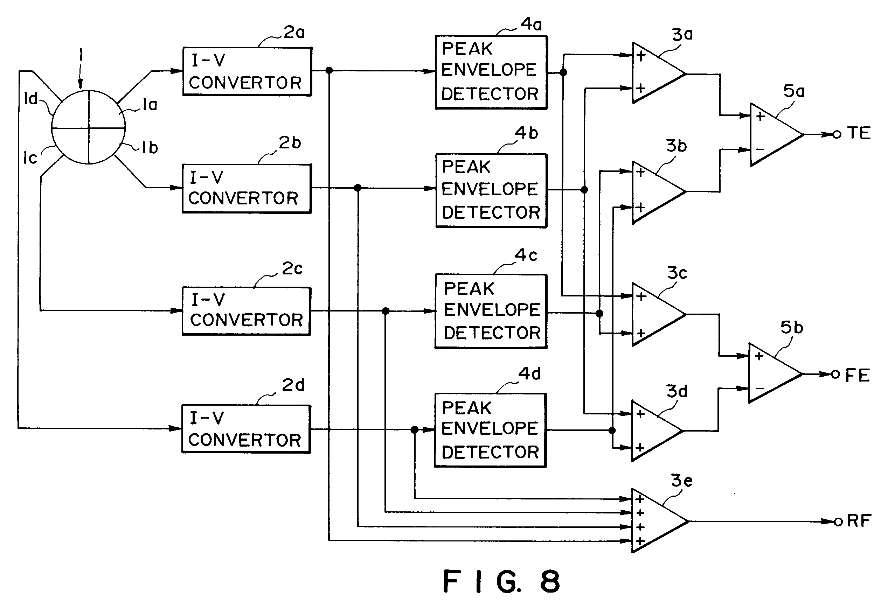

Fig.8 is a circuit diagram of an error signal generator according to another embodiment of the present invention. The different point of this embodiment from that shown in Fig.6 is that peak envelope detectors 4a to 4d are connected between I - V convertors 2a to 2d and adders 3a to 3e. This embodiment has the same advantages like those of the embodiment shown in Fig.6. An average light amount is shown indicated at (C) in Fig.7. Since a recorded area has H and L level signals at a high density, the average light amount is generally H/2. As a result, there exists a difference of average light amount between recorded area and unrecorded area, as indicated at (C) in Fig.7.

According to the above-described embodiment of the present invention, tracking and focus error signals are generated using peak envelope signals detected from light signals reflected from an optical disk. Therefore, a constant sensitivity is realized irrespective of whether a disk has already been recorded or not, providing easy settings of focus and tracking servo systems. Furthermore, searching recorded and unrecorded areas of a partially recorded optical disk can be performed with a constant error detection sensitivity, providing a stable searching.

## Claims

1. A trace type disk record/reproduction apparatus comprising:

   a focus servo circuit for focusing a laser beam spot on an optical disk;

   a tracking servo circuit for tracking a guide groove of recorded pits of said optical disk;

   a decision circuit for deciding whether an area of said optical disk is a recorded area or an unrecorded area; and

   a controller for controlling at least one of the loop gains of said focus servo circuit and said tracking servo circuit, in accordance with a decision by said decision circuit.

2. A trace type disk record/reproduction apparatus according to claim 1, wherein said decision circuit compares a bottom envelope detection signal of a reflected light to an optical pickup with a predetermined reference level.

3. A trace type disk record/reproduction apparatus according to claim 2, wherein said reference level is a level obtained by dividing or level-shifting said bottom envelope detection signal of a reflected light to said optical pickup.

4. An error signal generator for generating a focus error signal and a tracking error signal by converting light reflected from an optical recording medium into electric signals by an optical detector divided into a plurality of areas, and by processing the electric signals from a predetermined set of said plurality of areas, said error signal generator comprising:

   A peak envelope detector for detecting a peak envelope of each of said electric signals, the outputs of said peak envelope detectors being subject to subtraction to generate said focus error signal and said tracking error signal.

FIG. 1

EP 0 520 461 A2

**F I G. 2**

EP 0 520 461 A2

EP 0 520 461 A2

#1  #2  #3

PEAK ENVELOPE

a

c

b

BOTTOM ENVELOPE

GND

d

# FIG. 3

F I G. 4

FIG. 5

F I G. 6

RECORDED | UNRECORDED

(A)

GND

(B)

GND

(C)

GND

# F I G. 7

F I G. 8

EP 0 520 461 A2

FIG. 9